## Europäisches Patentamt

(19) **European Patent Office**

**Office européen des brevets**

(11) Numéro de publication: **0 126 208**
**A1**

## (12) DEMANDE DE BREVET EUROPEEN

(21) Numéro de dépôt: **84101064.8**

(22) Date de dépôt: **02.02.84**

(51) Int. Cl.³: **F 16 L 55/02**

(30) Priorité: **18.02.83 FR 8302724**

(43) Date de publication de la demande: **28.11.84**
**Bulletin 84/48**

(84) Etats contractants désignés: **DE GB IT**

(71) Demandeur: **FULLER COMPANY, 2040 Avenue "C", Bethlehem Pennsylvania (US)**

(72) Inventeur: **Toneliato, Sylvain, 15 rue Pierre Desjardins, F-78800 Houilles Yvelines (FR)**

(74) Mandataire: **Simonnot, Bernard et al, Cabinet Simonnot 49, Rue de Provence, F-75442 Paris Cédex 09 (FR)**

(54) **Limiteur de surpression pour tuyauterie.**

(57) L'invention concerne un limiteur de surpression pour tuyauterie destinée au transport pneumatique de matières pulvérulentes inflammables ou explosibles en vrac.

Un tel limiteur est interposé en série entre les brides de deux tubes consécutifs de la tuyauterie et comprend essentiellement deux coquilles hémicylindriques (5, 6) susceptibles de s'écarter l'une de l'autre sous l'effet d'une surpression accidentelle, maintenues accolées par au moins un dispositif de jonction (7) à résistance calibrée à l'ouverture par surpression et logées entre deux flasques transversaux (14) reliés par des entretoises (19, 20) et présentant un orifice central ayant le même diamètre que les coquilles accolées et les tubes.

L'invention est applicable par exemple au transport par lit fluidisé de farine ou de carbon pulvérulent.

## Limiteur de surpression pour tuyauterie

La présente invention concerne un limiteur de surpression pour tuyauterie destinée au transport pneumatique de matières pulvérulentes inflammables ou explosibles en vrac, par exemple de la farine ou du charbon transporté par air comprimé, une telle tuyauterie étant formée d'une série de tubes présentant un même diamètre intérieur et raccordés jointivement deux à deux au niveau de leurs brides d'extrémité.

Il est en effet particulièrement important qu'une tuyauterie de ce genre, dans laquelle peut se produire une inflammation ou une explosion de la matière pulvérulente transportée, comporte au moins un dispositif de sécurité ultime destiné à s'ouvrir pour laisser s'échapper les gaz de combustion avant que la surpression accidentelle provoquée par une telle inflammation ou explosion ne puisse endommager la tuyauterie elle-même.

Dans ce domaine, on connaît à l'heure actuelle des limiteurs de surpression qui sont montés en dérivation sur la tuyauterie et qui comportent une membrane susceptible de se déchirer ou un clapet susceptible de s'ouvrir sous l'effet d'une surpression accidentelle, permettant ainsi aux gaz de combustion de s'échapper sans endommager la tuyauterie. Mais ces dispositifs connus ne peuvent être montés qu'en dérivation sur la tuyauterie et, de ce fait, leur présence provoque des perturbations dans la circulation de la matière et des accumulations dangereuses de matière au droit de ces dispositifs.

La présente invention vise à remédier à ces inconvénients en fournissant un limiteur de surpression qui puisse être monté dans la tuyauterie d'une façon telle qu'il n'apporte aucune perturbation à l'écoulement des produits et ne détermine aucune accumulation de matière à proximité de son emplacement.

Conformément à l'invention, le limiteur de surpression pour une tuyauterie du type précité est interposé en série et entre les brides de deux tubes consécutifs de la tuyauterie et comprend essentiellement deux coquilles hémicylindriques disposées faces intérieures en regard, susceptibles de s'écarter l'une de l'autre sous l'effet d'une surpression et maintenues accolées entre elles de façon étanche par au moins un dispositif de jonction à résistance calibrée à l'ouverture par surpression monté sur leurs faces extérieures, les deux coquilles accolées formant une bague dont les deux extrémités circulaires sont logées de façon étanche entre deux flasques transversaux présentant chacun un orifice circulaire, respectivement fixés sur lesdites brides et maintenus l'un par rapport à

0126208

3

l'autre par des entretoises, les orifices de la
bague et des flasques présentant le même diamètre
intérieur que les tubes.

D'autres caractéristiques et avantages de la
présente invention ressortiront mieux de la description qui va suivre, faite en regard des dessins
annexés sur lesquels :

la figure 1 représente une vue longitudinale
extérieure avec coupes et arrachements partiels
du limiteur selon l'invention ;

la figure 2 représente une vue en coupe transversale du limiteur, suivant la ligne II-II de

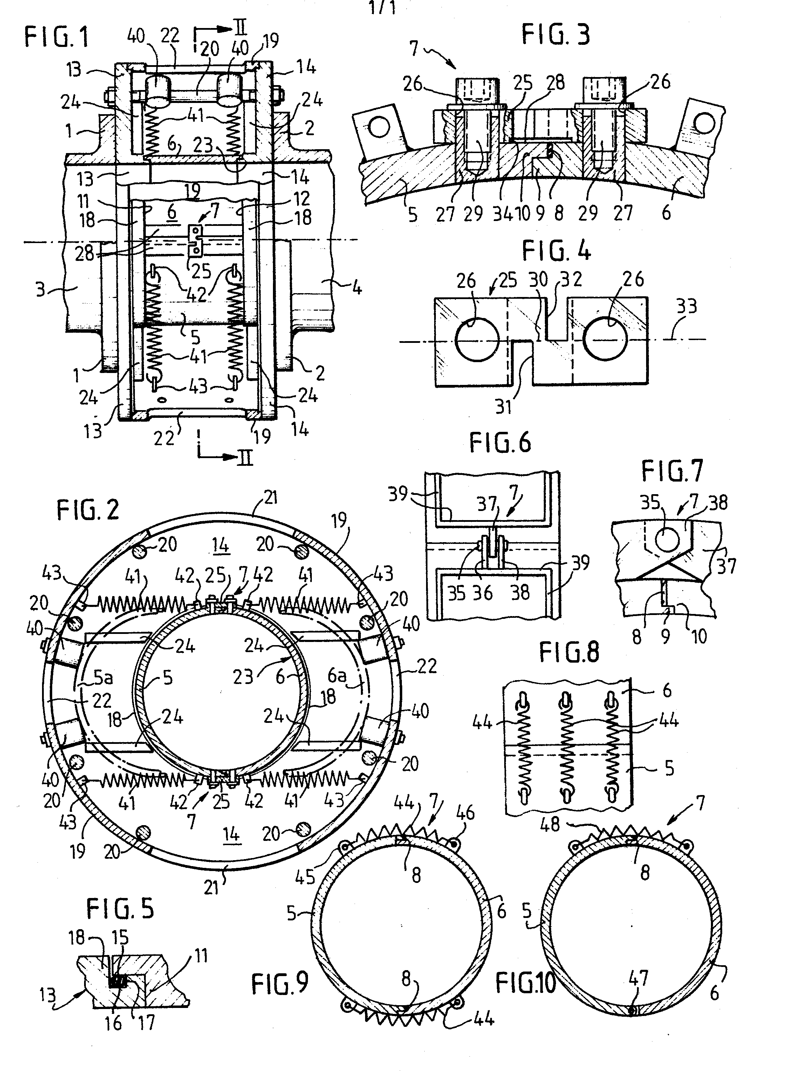

la figure 1, avec rotation de 90° ;

la figure 3 représente à échelle agrandie une
vue avec coupes partielles d'une forme de réalisation préférée du dispositif de jonction reliant
les coquilles du limiteur ;

la figure 4 représente une vue de dessus de
la plaquette du dispositif de jonction représenté
sur la figure 3 ;

la figure 5 représente une vue en coupe axiale
partielle au niveau du joint d'étanchéité entre
la bague et un flasque du limiteur ;

les figures 6 et 7 représentent respectivement
une vue longitudinale partielle et une vue en bout
partielle des coquilles reliées par une deuxième
forme de de réalisation du dispositif de jonction;

les figures 8 et 9 représentent respectivement
une vue longitudinale partielle et une vue en coupe
transversale des coquilles reliées par une troisième forme de réalisation du dispositif de jonction ; et

la figure 10 représente une vue en coupe transversale des coquilles reliées par une quatrième

4

forme de réalisation du dispositif de jonction.

Sur ces dessins, les mêmes références désignent les mêmes éléments.

En se référant aux figures, un limiteur de surpression selon l'invention est interposé en série entre les brides 1 et 2 de deux tubes consécutifs 3 et 4 d'une tuyauterie destinée au transport pneumatique de matières pulvérulentes inflammables ou explosibles en vrac, telles que de la farine ou du charbon à l'état pulvérulent transporté par de l'air comprimé, et pouvant par conséquent provoquer des surpressions accidentelles susceptibles d'endommager la tuyauterie, cette dernière étant formée d'une série de tubes, tels que les tubes 3 et 4, présentant un même diamètre intérieur et raccordés jointivement deux à deux au niveau de leurs brides d'extrémité, telles que les brides 1 et 2.

Selon une particularité essentielle de l'invention, le limiteur comprend deux coquilles hémicylindriques 5 et 6 disposées faces intérieures en regard, susceptibles de s'écarter l'une de l'autre sous l'effet d'une surpression et maintenues accolées entre elles de façon étanche par au moins un dispositif de jonction 7, du type à résistance calibrée à l'ouverture par surpression et monté sur les faces extérieures des coquilles. De préférence, les deux coquilles 5 et 6 comportent chacune deux portées longitudinales planes diamétralement opposées et coplanaires, un joint plat 8 étant disposé entre les portées en regard des coquilles accolées. Pour faciliter la mise en place des coquilles et du joint, l'une des portées de chaque coquille peut présenter un épaulement 9

destiné à coopérer avec une échancrure 10 de forme complémentaire, ménagée au niveau de l'autre portée de la coquille en regard. Compte tenu de tels épaulements et échancrures, il y a lieu de noter que les coquilles 5 et 6 peuvent être parfaitement identiques et présenter chacune une portée à épaulement et une portée à échancrure, ou bien ne pas être identiques, l'une des coquilles comportant deux portées à épaulement et l'autre deux portées à échancrure.

Selon une autre particularité essentielle de l'invention, les deux coquilles accolées 5 et 6 forment une bague dont les deux extrémités circulaires 11 et 12 sont logées de façon étanche entre deux flasques transversaux 13 et 14. De préférence, chaque extrémité 11 ou 12 de la bague comporte une courte portée cylindrique 15 constituée de deux moitiés hémicylindriques dont chacune correspond évidemment à l'une des coquilles 5 et 6 et est appliquée vers l'intérieur contre un joint torique 16 logé dans une gorge annulaire 17, cette dernière étant ménagée dans un bossage cylindrique 18 rapporté sur le flasque associé 13 ou 14 ou faisant partie intégrante de ce dernier.

Par ailleurs, il est clair que les flasques transversaux 13 et 14 sont respectivement fixés sur les brides 1 et 2 de façon connue en soi, par exemple au moyen de vis non représentées traversant longitudinalement la bride et en prise avec le flasque associé. Selon l'invention, les flasques 13 et 14 sont en outre maintenus l'un par rapport à l'autre par des entretoises. Dans le cas où les flasques sont circulaires, les entretoises peuvent comprendre une couronne cylindrique 19 calée entre les bords des flasques et des tirants 20 disposés périphériquement à proximité de la couronne et reliant les flasques. Une telle couronne cylindrique 19 doit être ajourée pour permettre l'évacuation des gaz de surpression provenant d'une inflammation ou explosion accidentelle de la matière transportée dans la tuyauterie et s'échappant de cette dernière lorsque les coquilles s'écartent l'une de l'autre. A cet effet, la couronne 19, qui est représentée en vue extérieure partielle à titre indicatif sur la figure 1, peut comporter de grands orifices 21 représentés uniquement sur la figure 2 et ménagés au droit du ou des dispositifs de jonction 7 et éventuellement des orifices 22 de section plus faible, représentés sur les figures 1 et 2 et ménagés entre les grands orifices 21.

En outre, les flasques transversaux 13 et 14 présentent chacun un orifice circulaire 23 qui est également percé dans le bossage associé 18 et, selon encore une particularité essentielle de l'invention, les orifices 23 des flasques 13 et 14 et l'orifice de la bague formée par les deux coquilles accolées 5 et 6 présentent le même diamètre intérieur que les tubes 3 et 4 de la tuyauterie, de telle sorte que les faces intérieures de la bague, des orifices des flasques et des tubes ne présentent pas de solution de continuité vis-à-vis de l'écoulement du lit fluidisé de matière pulvérulente, le limiteur de surpression selon l'invention ne créant ainsi aucune perte de charge dans la tuyauterie tant qu'elle n'est pas soumise à une surpression accidentelle suffisante pour provoquer l'ouverture du limiteur.

De préférence, les deux coquilles accolées 5 et 6 ont leurs portées planes disposées dans un même plan et sont maintenues par deux dispositifs de jonction 7 qui sont montés dans des positions diamétralement opposées sensiblement au niveau desdites portées, les flasques 13 et 14 comportant, de part et d'autre de leur bossage 18, des organes de guidage 24, tels que des profilés soudés sur les flasques, qui sont disposés perpendiculairement audit plan, et sont destinés à coopérer avec les coquilles lorsqu'elles s'écartent l'une de l'autre sous l'effet d'une surpression provoquée par l'inflammation ou l'explosion de la matière transportée dans la tuyauterie.

Plus précisément, les coquilles 5 et 6 peuvent être identiques comme indiqué ci-avant et avoir leurs portées accolées selon un plan vertical, tandis que les organes de guidage 24 sont alors disposés horizontalement, de telle sorte que les coquilles sont susceptibles de s'écarter latéralement l'une de l'autre.

Selon une forme de réalisation préférée, les deux dispositifs de jonction 7 sont du type à rupture brusque et comprennent chacun une plaquette 25 disposée transversalement à cheval sur les coquilles accolées 5 et 6, au niveau de leurs portées planes en regard, et fixée par l'une de ses extrémités à chacune des coquilles. Par exemple, chaque extrémité de la plaquette 5 comporte un perçage 26 destiné à être enfiché sur un téton ou ergot 27 qui est encastré dans la coquille, à proximité de sa portée plane et au niveau d'un méplat 28, de cette dernière et qui peut comporter une vis 29 de retenue de la plaquette.

La plaquette 25 comporte une partie centrale
30 formant une éprouvette calibrée destinée à
travailler essentiellement au cisaillement et
délimitée par deux fentes ou encoches parallèles
31 et 32, découpées dans des sens opposés perpendiculairement à l'axe de symétrie 33 de la plaquette et décalées l'une par rapport à l'autre le long
de cet axe, la plaquette pouvant présenter en outre
à sa partie inférieure un évidement transversal
médian 34.

Selon une deuxième forme de réalisation, les
deux dispositifs de jonction 7 sont également
du type à rupture brusque et comprennent chacun
une goupille calibrée 35 destinée à travailler
au cisaillement pur, disposée longitudinalement
au-dessus des coquilles accolées, au niveau de
leurs deux portées planes en regard, et insérée
dans des organes de fixation appartenant respectivement aux deux coquilles, par exemple trois
anneaux voisins et coaxiaux 36, 37 et 38, présentant un même diamètre intérieur correspondant
sensiblement au diamètre extérieur de la goupille
et disposés perpendiculairement aux portées planes,
l'anneau central 37 étant solidaire de l'une des
coquilles tandis que les deux anneaux extrêmes
36 et 38 sont solidaires de l'autre coquille,
lesdits anneaux pouvant être respectivement solidaires de nervures périphériques extérieures 39
dont chacune est réalisée sur l'une des coquilles.

Il y a lieu de noter que dans les deux formes
de réalisation précitées des dispositifs de jonction 7, ces derniers sont constitués par exemple
par des plaquettes 25 ou par des goupilles 35 qui
subissent des ruptures brusques quasi simultanées sous l'effet d'une surpression accidentelle apparaissant dans la tuyauterie, la rupture de l'un des dispositifs entraînant, au niveau de l'autre dispositif diamétralement opposé, une légère rotation qui, combinée avec la poussée due à la surpression, provoque la rupture immédiate de ce dernier. La rupture des deux dispositifs de jonction a évidemment pour effet de libérer les coquilles qui peuvent alors s'écarter l'une de l'autre en coulissant librement entre les organes de guidage 24, les gaz de surpression ainsi libérés pouvant s'échapper entre les entretoises ou par les orifices 21, voire 22 de la couronne cylindrique 19.

Lors de la libération des coquilles, pour éviter un choc trop brutal entre ces dernières et les entretoises, le limiteur peut comprendre des tampons amortisseurs 40 et, éventuellement, des ressorts antirebond 41 destinés à coopérer avec chacune des deux coquilles 5 et 6 lorsqu'elles s'écartent l'une de l'autre sous l'effet d'une surpression. Les tampons 40 peuvent être fixés sur les entretoises, notamment sur la face intérieure de la couronne cylindrique 19, dans le prolongement des organes de guidage 24 et, dans le cas où l'on utilise une couronne cylindrique, de part et d'autre des petits orifices 21 qui peuvent faciliter l'évacuation de l'air chassé par l'ouverture brutale des coquilles. Les ressorts antirebond 41 sont de préférence disposés sensiblement parallèlement aux organes de guidage 24 et peuvent avoir une extrémité accrochée aux coquilles, notamment à une patte 42 fixée sur la coquille à proximité de sa portée plane, et l'autre extrémité accrochée aux entretoises ou aux flasques, notamment à une patte 43 fixée sur la face intérieure de la couronne cylindrique 19.

Dans ces conditions, lorsque les coquilles hémicylindriques 5 et 6 s'écartent l'une de l'autre sous l'effet d'une surpression ayant déterminé la rupture des dispositifs de jonction 7, elles viennent buter contre les tampons amortisseurs 40 et s'immobilisent rapidement contre ces derniers sous l'effet des ressorts antirebond 41, occupant ainsi les positions représentées en traits mixtes et désignées respectivement par 5a et 6a sur la figure 2.

Il y a lieu de noter que, dans les deux formes de réalisation précédemment décrites des dispositifs de jonction 7, la rupture de la plaquette 25 ou de la goupille 35 correspond à une destruction qui nécessite un remplacement manuel de la plaquette ou de la goupille pour effectuer une remise en état du limiteur selon l'invention.

Par conséquent, il peut être intéressant de réaliser un limiteur pour lequel il n'est pas nécessaire d'effectuer une remise en état manuelle. Selon une troisième forme de réalisation, les deux dispositifs de jonction 7 sont du type à ouverture progressive et à refermeture automatique et comprennent chacun au moins un organe de liaison élastique disposé transversalement à cheval sur les coquilles accolées 5 et 6, au niveau de leurs portées planes en regard, et dont chacune des extrémités peut être raccordée à l'une des coquilles. Par exemple, chacun des dispositifs de jonction 7 peut comprendre deux ou trois ressorts identiques 44 montés parallèlement entre des pattes extérieures 45 et 46 appartenant respectivement aux deux coquilles, lesdits ressorts travaillant à l'extension lorsque les coquilles s'écartent sous l'effet d'une surpression accidentelle, la puissance des ressorts étant évidemment calculée en fonction de la surpression envisagée, les tampons amortisseurs 40 et les ressorts anti-rebonds 41 étant supprimés tandis que les organes de guidage 24 peuvent être conservés avec profit. En outre, il faut noter que l'une des coquilles peut être rendue fixe, par exemple rendue solidaire des flasques transversaux 13 et 14, auquel cas le plan commun des portées planes n'est pas nécessairement vertical mais peut être avantageusement horizontal, la coquille fixe étant disposée de préférence au-dessous de la coquille mobile, de manière à utiliser le poids propre de cette dernière pour faciliter la refermeture du limiteur.

Selon une quatrième forme de réalisation, le dispositif de jonction 7 est également du type à ouverture progressive et à refermeture automatique et comprend un axe d'articulation longitudinal fixe 47 reliant les deux coquilles 5 et 6 au niveau de leurs portées planes situées d'un côté de la bague et un organe de rappel tel qu'un contrepoids (non représenté) ou bien un ou plusieurs ressorts 48 reliant lesdites coquilles au niveau de leurs portées planes situées de l'autre côté de la bague. Il y a lieu de noter que l'axe d'articulation peut être situé au-dessus de l'ensemble de manière à utiliser le poids propre des coquilles pour soulager le ou les ressorts 48, étant entendu que les organes de guidage rectilignes 24 sont supprimés et peuvent éventuellement être remplacés par des organes de guidage en arc de cercle centrés sur l'axe d'articulation 47. Dans le cas où l'une des coquilles est rendue fixe, il peut être intéressant de la disposer sensiblement au-dessous de l'autre coquille, mais il peut être souhaitable de l'incliner de telle sorte que l'axe d'articulation soit placé plus haut que les ressorts de manière à utiliser le poids propre de la coquille mobile pour faciliter la refermeture du limiteur.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre.

REVENDICATIONS

1. Limiteur de surpression pour tuyauterie destinée au transport pneumatique de matières pulvérulentes inflammables ou explosibles en vrac pouvant provoquer des surpressions accidentelles et formée d'une série de tubes présentant un même diamètre intérieur et raccordés jointivement deux à deux au niveau de leurs brides d'extrémité, limiteur caractérisé par le fait qu'il est interposé en série entre les brides (1,2) de deux tubes consécutifs (3,4) et qu'il comprend deux coquilles hémicylindriques (5,6) disposées faces intérieures en regard, susceptibles de s'écarter l'une de l'autre sous l'effet d'une surpression et maintenues accolées entre elles de façon étanche par au moins un dispositif de jonction (7) à résistance calibrée à l'ouverture par surpression monté sur leurs faces extérieures, les deux coquilles accolées formant une bague dont les deux extrémités circulaires (11, 12) sont logées de façon étanche entre deux flasques transversaux (13,14) présentant chacun un orifice circulaire (23), respectivement fixés sur lesdites brides et maintenus l'un par rapport à l'autre par des entretoises (19,20), les orifices de la bague et des flasques présentant le même diamètre intérieur que les tubes.

2. Limiteur suivant la revendication 1, caractérisé par le fait que les deux coquilles comportent chacune deux portées longitudinales planes diamétralement opposées et de préférence coplanaires et qu'un joint plat (8) est disposé entre les portées en regard des coquilles accolées, l'une des portées de chaque coquille pouvant présenter un épaulement (9) destiné à coopérer avec une échancrure (10) de forme complémentaire ménagée dans l'autre portée de la coquille en regard.

3. Limiteur suivant la revendication 1, caractérisé par le fait que chaque extrémité de la bague comporte une courte portée cylindrique (15) constituée de deux moités hémicylindriques dont chacune correspond à l'une des coquilles et est appliquée vers l'intérieur contre un joint torique (16) logé dans une gorge annulaire (17) ménagée dans un bossage cylindrique (18) qui est réalisé sur le flasque associé et dans lequel est percé l'orifice circulaire.

4. Limiteur suivant l'une quelconque des revendications 1 à 3, caractérisé par le fait que les deux coquilles accolées ont leurs portées planes disposées dans un même plan et sont maintenues par deux dispositifs de jonction montés dans des positions diamétralement opposées sensiblement au niveau desdites portées, et que les flasques comportent, de part et d'autre de leur bossage, des organes de guidage (24) disposés perpendiculairement audit plan et destinés à coopérer avec les coquilles lorsqu'elles s'écartent l'une de l'autre sous l'effet d'une surpression.

5. Limiteur suivant la revendication 4, caractérisé par le fait que les deux dispositifs de jonction sont du type à rupture brusque et comprennent chacun une plaquette (25), disposée transversalement à cheval sur les coquilles accolées, au niveau de leurs deux portées planes en regard, fixée par l'une de ses extrémités à chacune des coquilles, et comportant une partie centrale (30) formant éprouvette calibrée, délimitée par deux encoches parallèles (31,32), découpées dans des sens opposés perpendiculairement à l'axe de symétrie (33) de la plaquette et décalées l'une par rapport à l'autre le long de cet axe.

6. Limiteur suivant la revendication 4, caractérisé par le fait que les deux dispositifs de jonction sont du type à rupture brusque et comprennent chacun une goupille calibrée (35) disposée longitudinalement au-dessus des coquilles accolées, au niveau de leurs deux portées planes en regard, et insérée dans des organes de fixation appartenant respectivement aux deux coquilles.

7. Limiteur suivant l'une quelconque des revendications 1 à 6, caractérisé par le fait qu'il comprend des tampons amortisseurs (40) et, éventuellement des ressorts antirebond (41) destinés à coopérer avec chacune des deux coquilles lorsqu'elles s'écartent l'une de l'autre sous l'effet d'une surpression, les tampons pouvant être fixés sur les entretoises dans le prolongement des organes de guidage et les ressorts antirebond pouvant être disposés sensiblement parallèlement aux organes de guidage et avoir une extrémité accrochée aux coquilles et l'autre aux entretoises ou aux flasques.

8. Limiteur suivant la revendication 4, caractérisé par le fait que les deux dispositifs de jonction sont du type à ouverture progressive et à refermeture automatique et comprennent chacun au moins un organe de liaison élastique tel qu'un ressort (44) disposé transversalement à cheval sur les coquilles accolées, au niveau de leurs portées planes en regard, et dont les deux extrémités peuvent être respectivement accrochées aux deux coquilles, l'une de celles-ci pouvant éventuellement être rendue fixe.

9. Limiteur suivant l'une quelconque des revendications 1 à 3, caractérisé par le fait que le dispositif de jonction est du type à ouverture progressive et à refermeture automatique et comprend un axe d'articulation longitudinal fixe (47) reliant les deux coquilles au niveau de leurs parties planes situées d'un côté de la bague et un organe de rappel tel qu'un contrepoids ou un ressort (48) les reliant au niveau de leurs portées planes situées de l'autre côté de la bague, l'une des coquilles pouvant être rendue fixe.

10. Limiteur suivant l'une quelconque des revendications 1 à 9, caractérisé par le fait que les flasques sont circulaires et que les entretoises comprennent une couronne cylindrique ajourée (19) calée entre les bords des flasques et des tirants (20) disposés périphériquement à proximité de la couronne et reliant les flasques.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 854 171 (VEREINIGTE ALUMINIUMWERKE) | | F 16 L 55/02 |
| | --- | | |
| A | CH-A- 538 646 (S. GHELFI) | | |
| | ----- | | |

**DOMAINES TECHNIQUES RECHERCHES (Int. Cl. 3)**

F 16 L
B 65 G
B 65 D

Le présent rapport de recherche a été établi pour toutes les revendications

| Lieu de la recherche | Date d'achèvement de la recherche | Examinateur |
|---|---|---|
| LA HAYE | 29-05-1984 | SCHAEFFLER C.A.A. |